# FASCICULE DE BREVET EUROPEEN

(11) **EP 3 180 658 B1**
(45) Date de publication et mention de la délivrance du brevet: **03.06.2020**
(21) Numéro de dépôt: 15750695.7
(22) Date de dépôt: 10.08.2015
(51) Int. Cl.: G05B 15/02, H04L 9/08, G08C 17/02

(54) **CONFIGURATION SECURISEE D'UNE INSTALLATION DOMOTIQUE**
SICHERE KONFIGURATION EINER HAUSHALTSAUTOMATISIERUNGSVORRICHTUNG
SECURE CONFIGURATION OF A HOME-AUTOMATION APPARATUS

(30) Priorité: 11.08.2014 FR 1457756
(43) Date de publication de la demande: 21.06.2017
(73) Titulaire: Somfy Activites SA, 74300 Cluses (FR)
(72) Inventeur: MUGNIER, Mickaël, F-74130 Bonneville (FR); MARMEY, Stéphane, F-74370 Naves Parmelan (FR); DESBIOLLES, Arnaud, F-74930 Pers-Jussy (FR); GROSSET, Florent, F-74300 Thyez (FR); PARTAKELIDIS, Philippe, F-74250 Viuz en Sallaz (FR); BRUNEAU, Guillaume, F-74130 Bonneville (FR)
(74) Mandataire: Novaimo
(86) Numéro de dépôt international: PCT/EP2015/068393
(87) Numéro de publication internationale: WO 2016/023871

(56) Documents cités:
- EP-A1- 2 592 810
- EP-A2- 1 587 044
- US-A1- 2007 258 508

## Description

L'invention concerne un procédé de configuration d'une installation domotique comportant un ou plusieurs points de commande et un ou plusieurs actionneurs commandés par ces points de commande. Elle concerne aussi un procédé de fonctionnement d'un actionneur de l'installation domotique. Elle concerne enfin un dispositif de configuration, un actionneur et une installation domotique associés.

Dans une installation domotique, les actionneurs sont les éléments destinés à piloter des équipements domotiques tels que des écrans de fermeture, d'occultation, de protection solaire ou de projection, ou des dispositifs d'éclairage, de chauffage ou de climatisation. Ils sont commandés par un ou plusieurs points de commande.

Les points de commande peuvent être mobiles ou fixes et aptes à communiquer avec les actionneurs par une liaison sans fil ou filaire, de façon unidirectionnelle ou bidirectionnelle.

Les actionneurs sont capables de communiquer selon au moins deux modes de communication disposant de mécanismes de sécurité différents.

Un mode de communication utilise une clé de chiffrement, également appelée clé de cryptage. Il est notamment utilisé pour effectuer des opérations de configuration nécessitant un haut degré de sécurité qui repose sur un chiffrement des communications.

Un autre mode de communication, plus simple, s'affranchit de l'utilisation d'une clé de chiffrement. Dans ce cas, la sécurité repose par exemple sur le mécanisme suivant :
lors d'une configuration préalable, on mémorise dans chaque élément de l'installation domotique l'identifiant des autres éléments avec lesquels il est autorisé à coopérer ; lors des émissions, chaque élément insère son identifiant dans les messages transmis; lors des réceptions, il vérifie l'identifiant de l'émetteur contenu dans chaque message reçu et ne prend en compte le contenu du message que s'il connaît l'identifiant reçu.

Dans ce cas, la sécurité est basée sur la vérification de l'identité de l'émetteur du message par le récepteur, qui doit préalablement connaître celui-ci.

Les points de commande utilisant ce mode de communication, plus simple sont moins coûteux que les points de commande utilisant le mode de communication basé sur le chiffrement des messages. Ils sont donc économiquement plus intéressants pour les clients.

Pour configurer une installation domotique comportant des actionneurs et un ou plusieurs points de commande, il est connu d'utiliser un dispositif de configuration, tel que l'outil d'installation « Set&Go io© » de la société Somfy. Ce type de dispositif est généralement utilisé par un installateur.

Un tel dispositif de configuration possède toutefois des limitations fonctionnelles pour configurer des installations domotiques ne possédant que des points de commande utilisant le mode de communication plus simple. Les fonctions suivantes, nécessitant la transmission des données de configuration, avec un haut degré de sécurité lors des échanges, ne peuvent notamment pas être mises en œuvre :
- renommer les actionneurs ;
- récupérer des données d'installation au niveau des actionneurs ;
- modifier le réglage d'un équipement domotique piloté par un actionneur, par exemple pour régler à nouveau un moteur de volet.

Un point de commande utilisant le mode de communication plus simple est donc moins coûteux mais dispose de fonctions moins évoluées qu'un point de commande possédant une clé de chiffrement.

Actuellement, il existe deux solutions permettant à un installateur de confier une clé de chiffrement à un actionneur.

Selon la première solution, l'installateur utilise un point de commande spécifiquement dédié à l'installation, qui lui est propre. Ce point de commande possède sa propre clé de chiffrement qu'il transmet à l'actionneur (ou aux actionneurs) à configurer. Lorsque l'installateur quitte l'installation domotique, il s'en va avec son point de commande et la clé de chiffrement associée. Cela est problématique car, ultérieurement, lorsqu'un autre installateur viendra pour éventuellement reconfigurer l'installation domotique, il ne sera pas capable de la découvrir du fait qu'il ne connaît pas la clé de chiffrement initialement utilisée.

Selon la deuxième solution, l'installateur utilise un point de commande possédant une clé de chiffrement, et laisse ce point de commande dans l'installation domotique lorsqu'il s'en va. Cette deuxième solution est coûteuse. En outre, elle nécessite de faire appel à un installateur formé pour modifier ultérieurement la configuration, si besoin.

Dans ce contexte il est fait référence aux documents d'art antérieur EP 2 592 810 A1, EP 1 587 044 A2 et US 2007/258508 A1.

La présente invention vient améliorer la situation. A cet effet, l'invention concerne un procédé de configuration d'une installation domotique comprenant :
- au moins un point de commande d'un premier type, destiné à communiquer selon un premier mode de communication, et
- au moins un actionneur :
   - destiné à communiquer, à la fin de l'exécution du procédé de configuration, selon le premier mode de communication avec au moins un point de commande du premier type, lors d'un fonctionnement en mode d'utilisation, et
   - apte à communiquer selon un deuxième mode de communication sécurisée au moyen d'une clé de chiffrement, avec un dispositif de configuration, lors d'un fonctionnement en mode de configuration,
   le procédé étant mis en œuvre par le dispositif de configuration et comprenant au moins :
   - une étape de détermination d'au moins un actionneur susceptible d'être configuré,
   - une étape d'obtention d'une clé de chiffrement temporaire ayant une durée de validité limitée,
   - une étape d'envoi d'un message contenant la clé de chiffrement temporaire à l'au moins un actionneur susceptible d'être configuré,
   - une première étape de communication selon le deuxième mode de communication sécurisée au moyen de la clé de chiffrement temporaire, avec l'au moins un actionneur fonctionnant en mode de configuration, et
   - une étape d'effacement de la clé de chiffrement temporaire, d'une mémoire de l'actionneur à l'expiration de la durée de validité de la clé de chiffrement temporaire.

Selon l'invention, le dispositif de configuration transmet à un ou plusieurs actionneurs une clé de chiffrement temporaire. Cette clé temporaire peut être générée par le dispositif de configuration lui-même, ou éventuellement par une autre entité. Par définition, une clé « temporaire » est une clé ayant une durée de validité limitée. Cette durée de validité peut être prédéterminée, c'est-à-dire fixée à l'avance. Dans ce cas, elle peut être transmise par le dispositif de configuration à l'actionneur avec la clé temporaire. En variante, elle peut être déterminée par l'envoi d'un message de fin de validité en provenance du dispositif de configuration et à destination de l'actionneur. Le message de fin de validité indique la fin de validité de la clé, qui est avantageusement effective dès réception de ce message par l'actionneur. Cette clé temporaire est utilisée pour sécuriser les communications entre le dispositif de configuration et l'actionneur , par exemple par chiffrement à l'aide de la clé de tout ou partie des données transmises. L'octroi à un ou plusieurs actionneurs d'une clé de chiffrement temporaire permet au dispositif de configuration d'accéder à des fonctions plus évoluées, notamment de configuration, nécessitant un degré élevé de sécurité. Il peut renommer un actionneur, récupérer des informations d'installation au niveau de l'actionneur, modifier des paramètres de fonctionnement de l'équipement domotique piloté, etc.. En outre, comme cette clé est temporaire, elle est effacée de la mémoire de l'actionneur à l'issue de sa durée de validité. Ainsi, l'actionneur, une fois configuré, est remis dans un état intact, sans clé de chiffrement. Après effacement de la clé temporaire, l'installation domotique est propre et peut ultérieurement être découverte par n'importe quel autre installateur.

Dans un mode de réalisation particulier, le procédé est caractérisé
- en ce que, selon le deuxième mode de communication sécurisée au moyen de la clé de chiffrement temporaire, l'au moins un actionneur et le dispositif de configuration communiquent en émission et en réception,
- et en ce que le procédé comprend en outre une étape de réception depuis l'au moins un actionneur d'un message de confirmation de fin de validité de la clé de chiffrement temporaire.

Les communications utilisant le mode de communication sécurisée au moyen d'une clé de chiffrement peuvent être bidirectionnelles. Ce mode de communication bidirectionnelle est ici qualifié de type « 2W » (de l'anglais « 2-Way » signifiant « deux sens » ou « bidirectionnelle »).

Le ou les actionneurs ayant reçu puis effacé la clé temporaire accusent, c'est-à-dire confirment, l'effacement de la clé par l'envoi d'un message de confirmation de fin de validité au dispositif de configuration. Celui-ci peut vérifier si le ou les actionneurs ayant reçu la clé l'ont correctement effacée, à l'issue de sa durée de validité. Si un actionneur ne confirme pas l'effacement de la clé temporaire, le dispositif de configuration peut déclencher des actions adaptées.

Avantageusement, l'étape de détermination comprend une sous-étape de réception d'au moins un message émis depuis l'au moins un actionneur.

L'étape de détermination d'au moins un actionneur susceptible d'être configuré peut consister à déterminer, parmi le ou les actionneurs de l'installation domotique, celui ou ceux capables de gérer une clé temporaire de chiffrement, à partir de messages provenant des actionneurs et contenant chacun des caractéristiques de l'actionneur.

Selon une variante de réalisation particulier, le procédé comprend, préalablement à l'étape de détermination, une étape de déclenchement du fonctionnement de l'au moins un actionneur en mode de configuration. Avantageusement, l'étape de déclenchement consiste à effectuer une action prédéterminée sur un point de commande du premier type avec lequel l'au moins un actionneur est destiné à communiquer. Par exemple, un installateur peut appuyer sur un bouton spécifique de type « PROGRAMMATION » d'un point de commande appairé à l'actionneur pour déclencher l'envoi d'une demande de basculement en mode de configuration.

Dans un mode particulier de réalisation, le procédé est caractérisé
- en ce que l'installation domotique comprend en outre au moins un point de commande d'un deuxième type apte à communiquer selon le deuxième mode de communication sécurisée au moyen d'une clé de chiffrement propre audit point de commande du deuxième type,
- en ce que l'au moins un actionneur, est apte en outre à communiquer avec l'au moins un point de commande du deuxième type, selon le deuxième mode communication sécurisée au moyen de la clé de chiffrement propre à l'au moins un point de commande du deuxième type, lors d'un fonctionnement en mode d'utilisation,
- et en ce que le procédé comprend en outre une deuxième étape de communication selon le deuxième mode de communication sécurisée au moyen de la clé de chiffrement temporaire avec l'au moins un actionneur.

Lors de la deuxième étape de communication, le dispositif de configuration transmet avantageusement à l'au moins un actionneur des données de gestion de la clé de chiffrement propre audit point de commande du deuxième type. Par exemple, les données de gestion peuvent comprendre un ordre d'effacement de la clé du point de commande ou de remplacement par une clé de chiffrement propre à un autre point de commande du deuxième type.

Ce mode de réalisation permet de reconfigurer l'installation domotique par transformation du mode de communication d'un ou plusieurs actionneurs. Une telle reconfiguration peut être réalisée lorsque le point de commande du deuxième type, auquel le ou les actionneurs sont appairés, est remplacé par un point de commande du premier type. Notons qu'un actionneur peut être « mixte », c'est-à-dire il communique selon le premier mode de communication, plus simple, avec un point de commande du premier type auquel il est appairé, et selon le deuxième mode de communication sécurisée au moyen d'une clé de chiffrement, avec un point de commande du deuxième type auquel il est appairé.

Dans les revendications, les termes « premier/première » et « deuxième » servent uniquement à identifier les étapes concernées. Ils n'impliquent pas de limitation d'ordre, notamment chronologique ou numérique.

L'invention concerne aussi un procédé de fonctionnement d'un actionneur, l'actionneur appartenant à une installation domotique et étant
- destiné à communiquer selon un premier mode de communication, avec au moins un point de commande d'un premier type appartenant à l'installation domotique, lors d'un fonctionnement en mode d'utilisation, et
- apte à communiquer selon un deuxième mode de communication sécurisée au moyen d'une clé de chiffrement, avec un dispositif de configuration, lors d'un fonctionnement en mode de configuration,
le procédé étant mis en œuvre par l'actionneur et comprenant au moins :
- une étape de réception d'un message contenant une clé de chiffrement temporaire ayant une durée de validité limitée, en provenance du dispositif de configuration,
- une étape de communication selon le deuxième mode de communication sécurisée au moyen de la clé de chiffrement temporaire, avec le dispositif de configuration, la clé de chiffrement temporaire étant effacée d'une mémoire de l'actionneur à l'expiration d'une durée de validité de ladite clé temporaire.

Avantageusement, selon le deuxième mode de communication sécurisée, l'actionneur et le dispositif de configuration communiquent en émission et en réception, et le procédé comprend en outre une étape d'émission d'un message de confirmation de fin de validité de la clé de chiffrement temporaire, à destination du dispositif de configuration.

L'invention concerne encore un dispositif de configuration d'une installation domotique, ladite installation comprenant :
- au moins un point de commande d'un premier type, destiné à communiquer selon un premier mode de communication, et
- au moins un actionneur :
   - destiné communiquer selon le premier mode de communication avec au moins un point de commande du premier type, lors d'un fonctionnement en mode d'utilisation, et
   - aptes à communiquer selon un deuxième mode de communication sécurisée au moyen d'une clé de chiffrement, avec un dispositif de configuration, lors d'un fonctionnement en mode de configuration,
le dispositif de configuration comprenant au moins un élément de gestion d'au moins une clé de chiffrement temporaire ayant une durée de validité limitée, ledit élément de gestion de clé temporaire étant agencé de sorte à déterminer au moins un actionneur susceptible d'être configuré, obtenir une clé de chiffrement temporaire, envoyer un message contenant la clé de chiffrement temporaire à l'au moins un actionneur susceptible d'être configuré, et effacer d'une mémoire de l'actionneur la clé de chiffrement temporaire à l'expiration d'une durée de validité de ladite clé temporaire.

L'invention concerne aussi un actionneur pour une installation domotique, ladite installation comprenant au moins un point de commande d'un premier type destiné à communiquer selon un premier mode de communication, ledit actionneur étant
- destiné à communiquer selon le premier mode de communication avec l'au moins un point de commande du premier type, lors d'un fonctionnement en mode d'utilisation, et
- apte à communiquer selon un deuxième mode de communication sécurisée au moyen d'une clé de chiffrement, avec un dispositif de configuration, lors d'un fonctionnement en mode de configuration,
caractérisé en ce qu'il comprend un module de communication agencé de sorte à recevoir un message contenant une clé de chiffrement temporaire ayant une durée de validité limitée, en provenance du dispositif de configuration et à communiquer selon le deuxième mode de communication sécurisée au moyen de la clé de chiffrement temporaire, avec le dispositif de configuration et en ce que le module de communication est agencé de sorte à effacer d'une mémoire de l'actionneur la clé de chiffrement temporaire à l'expiration d'une durée de validité de ladite clé temporaire.

Avantageusement, le module de communication est agencé de sorte à effacer la clé de chiffrement temporaire à l'expiration d'une durée de validité de ladite clé temporaire.

L'invention concerne enfin une installation domotique comportant
- au moins un point de commande d'un premier type, destiné à communiquer selon un premier mode de communication, et
- au moins un actionneur tel que précédemment défini.

L'invention sera mieux comprise à l'aide de la description suivante du procédé de configuration d'une installation domotique et du procédé de fonctionnement d'un actionneur d'une installation domotique, selon différents modes particuliers de réalisation de l'invention, ainsi que d'un dispositif de configuration, d'un actionneur et d'une installation domotique associés, en référence aux dessins annexés sur lesquels :
- La figure 1 représente schématiquement une installation domotique, selon un premier exemple particulier de réalisation de l'invention ;
- Les figures 2A et 2B représentent schématiquement une installation domotique, selon un deuxième exemple particulier de réalisation de l'invention, respectivement avant et après configuration ;
- La figure 3 représente un schéma bloc fonctionnel d'un dispositif de configuration, selon une forme de réalisation particulière de l'invention ;
- La figure 4 représente un schéma bloc fonctionnel d'un actionneur, selon une forme de réalisation particulière de l'invention ;
- La figure 5 représente un organigramme d'étapes du procédé de configuration d'une installation domotique, selon un premier mode de réalisation de l'invention ;
- La figure 6 représente un organigramme d'étapes du procédé de configuration d'une installation domotique, selon une variante de réalisation du procédé de la figure 5 ;
- La figure 7 représente un organigramme d'étapes du procédé de configuration d'une installation domotique selon un deuxième mode de réalisation de l'invention ;
- La figure 8 représente un organigramme d'étapes du procédé de fonctionnement d'un actionneur, selon un mode de réalisation particulier de l'invention.

D'emblée, on notera que, sur les différentes figures, les éléments ou étapes analogues ou correspondantes portent les mêmes références, sauf indication spécifique contraire.

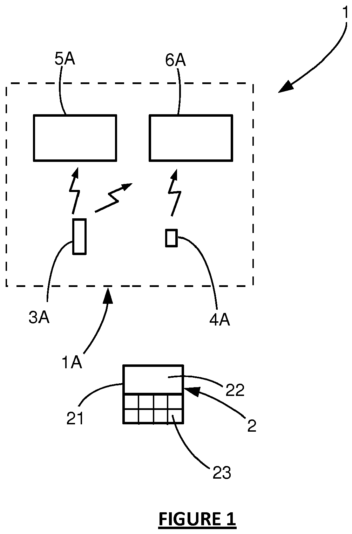

Sur la figure 1, on a représenté une installation domotique 1 selon un premier exemple particulier de réalisation de l'invention. L'installation domotique 1 comprend des points de commande 3A, 4A et des actionneurs 5A, 6A. Les points de commande 3A, 4A peuvent être des télécommandes, par exemple mobiles et sans fil. Les actionneurs 5A, 6A sont destinés à piloter des équipements domotiques associés, tels que des volets roulants motorisés, des équipements d'éclairage, chauffage, ventilation et climatisation. Par exemple, la télécommande 3A est destinée à commander les deux actionneurs 5A et 6A et la télécommande 4A est destinée à commander seulement l'actionneur 6A. Ainsi, la télécommande 3A est appairée, ou associée, aux deux actionneurs 5A, 6A, alors que la télécommande 4A est appairée, ou associée, au seul actionneur 6A.

Le terme « appairage », ou « appairé », désigne ici l'action de mettre par paire un point de commande et un actionneur destinés à communiquer l'un avec l'autre, notamment pour commander l'utilisation de l'actionneur et de l'équipement domotique associé.

Chaque point de commande 3A (respectivement 4A) et les actionneurs qui lui sont appairés 5A, 6A (respectivement 6A) sont destinés à communiquer entre eux selon un premier mode de communication. De ce fait, ils sont dits « d'un premier type ». Plus précisément, les points de commande 3A et 4A sont dits « d'un premier type » du fait qu'il sont aptes à communiquer selon le premier mode de communication avec toute autre entité communicante, notamment des actionneurs. Les actionneurs sont dits « d'un premier type » du fait qu'ils sont aptes à communiquer selon le premier mode de communication, lors d'un fonctionnement en mode d'utilisation.

Par « fonctionnement en mode d'utilisation », on entend désigner le fonctionnement d'un actionneur lorsque celui est utilisé pour piloter et faire fonctionner l'équipement domotique auquel il est associé, ou appairé. Par exemple, dans le cas d'un actionneur de volet roulant motorisé, le fonctionnement en mode d'utilisation correspond notamment à l'ouverture et/ou la fermeture du volet roulant.

Le premier mode de communication entre un actionneur et un point de commande présente par exemple les caractéristiques suivantes :
- les communications entre l'actionneur et le point de commande sont unidirectionnelles : le point de commande peut seulement émettre des messages et l'actionneur peut seulement recevoir des messages ;
- l'actionneur possède en mémoire un identifiant ID_{PdC} du point de commande (ou des points de commande) avec lequel (ou lesquels) il est autorisé à communiquer ;
- les messages de commande émis par le point de commande à destination de l'actionneur contiennent l'identifiant ID_{PdC} du point de commande ;
- l'actionneur vérifie l'identifiant contenu dans les messages de commande reçus et n'exécute les commandes que s'il reconnaît l'identifiant ID_{PdC} du point de commande.

Ce premier mode de communication étant ici unidirectionnel, il est aussi qualifié de « 1W » (de l'anglais « One-Way » que l'on peut traduire par « sens unique » ou « unidirectionnel »).

Le premier mode de communication dispose d'un premier niveau de sécurité, basé ici sur la vérification de l'identité du point de commande ayant transmis le message de commande. Il peut donc être qualifié de mode de communication sécurisé.

Le premier mode de communication pourrait toutefois présenter des caractéristiques différentes de celles mentionnées plus haut, en tout ou partie.

Les actionneurs 5A, 6A sont en outre aptes à communiquer selon un deuxième mode de communication, avec un dispositif de configuration 2, lors d'un fonctionnement en mode de configuration.

Par « fonctionnement en mode de configuration », on entend désigner le fonctionnement d'un actionneur lorsque celui est configuré, c'est-à-dire lorsqu'il est programmé et/ou paramétré pour assurer un fonctionnement souhaité. Par exemple, dans le cas d'un actionneur de volet roulant motorisé, le fonctionnement en mode configuration permet d'installer dans l'actionneur une mise de jour de software, de régler des paramètres de l'actionneur relatifs à l'ouverture et/ou la fermeture du volet roulant, ou encore de configurer des communications de l'actionneur avec un ou plusieurs points de commande.

Le deuxième mode de communication possède un niveau de sécurité qui est ici plus élevé que celui du premier mode de communication. Il utilise une clé de chiffrement. Cette clé est utilisée pour réaliser des opérations cryptographiques destinées à sécuriser les communications entre deux entités communicantes, notamment entre un actionneur et un point de commande. Par exemple, la clé est une clé secrète partagée par les deux entités communicantes et destinée à chiffrer les messages transmis entre les deux entités. Selon le deuxième mode de communication, les deux entités communicantes peuvent communiquer l'une avec l'autre :
- de façon monodirectionnelle, l'une des entités (par exemple le point de commande) communiquant seulement en émission, et l'autre entité (par exemple l'actionneur) communiquant seulement en réception,
- ou de façon bidirectionnelle, chaque entité pouvant communiquer à la fois en émission et en réception.

Dans le premier cas (monodirectionnel), le deuxième mode de communication peut être qualifié de « 1W » (de l'anglais « 1-Way). Dans le deuxième cas (bidirectionnel), le deuxième mode de communication peut être qualifié de « 2W » (de l'anglais « 2-Way » pouvant être traduit par « deux sens » ou « bidirectionnel »). Dans l'exemple particulier de réalisation décrit ici, le deuxième mode de communication utilisé par le dispositif de communication 2 pour communiquer avec les actionneurs 5A, 6A est bidirectionnel, ou 2W.

Les premier et deuxième modes de communication peuvent utiliser un même protocole de communication, par exemple io-homecontrol (marque déposée).

Les actionneurs de premier type 5A, 6A peuvent être configurés à partir d'un dispositif de configuration 2.

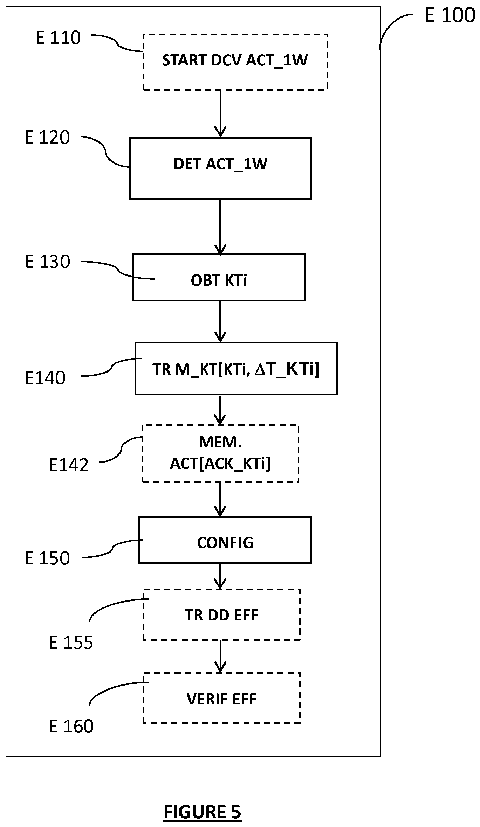

En référence à la figure 5, on va maintenant décrire un premier mode de réalisation du procédé E100 de configuration de l'installation domotique 1, selon l'invention. La configuration est réalisée à partir du dispositif de configuration 2. Elle peut être réalisée par un utilisateur, par exemple un installateur domotique, équipé du dispositif de configuration 2. Sur la figure 5, les étapes encadrées en pointillés (E110, E142, E155, E160) sont optionnelles.

Le procédé comprend une première étape E110 de déclenchement d'un fonctionnement en mode de configuration, également appelé mode « de découverte », des actionneurs 5A et 6A. Le déclenchement en mode de configuration d'un actionneur 5A (respectivement 6A) consiste à effectuer une action prédéterminée sur un point de commande 3A (respectivement 3A ou 4A) avec lequel l'actionneur est destiné à communiquer, c'est-à-dire avec lequel il est appairé. Par exemple, l'action de déclenchement peut consister pour l'utilisateur à appuyer sur un bouton spécifique du point de commande, tel qu'un bouton « PROGRAMMATION ». Le point de commande émet alors un message de demande de basculement en mode découverte ou mode de configuration à destination du ou des actionneurs auxquels il est appairé. Sur réception de la demande, les actionneurs 3A et 4A passent en mode de découverte (ou de configuration). Par exemple, l'utilisateur appuie sur le bouton « PROGRAMMATION » du point de commande 3A, ce qui fait passer les deux actionneurs 5A et 6A en mode de découverte. Lorsque les actionneurs 5A et 6A sont en mode de configuration, ils sont capables de communiquer de façon bidirectionnelle avec le module de configuration 2. Aussi, après avoir basculé en mode de configuration, les actionneurs 5A et 6A émettent chacun un message de découverte M_DCV_{5A}, M_DCV_{6A} (étape S110).

Cette étape E110 est toutefois optionnelle car les actionneurs peuvent envoyer spontanément des messages de découverte, par exemple à leur mise sous tension, ou de façon périodique, ou bien tant qu'ils ne sont pas encore configurés dans le cas d'actionneurs vierges.

Le message de découverte d'un actionneur contient des données caractéristiques relatives à cet actionneur, notamment des caractéristiques produit, qui peuvent comprendre un identifiant de l'actionneur ID_{ACT}, un identifiant du fabricant de l'actionneur, l'indication d'une version logicielle ou de « software » implémentée dans l'actionneur, le type de l'actionneur (ici « premier type »).

Le procédé se poursuit par une étape E120 de détermination d'au moins un actionneur susceptible d'être configuré. Lors de cette étape E120, le dispositif de configuration 2 reçoit les messages de découverte en provenance des actionneurs 5A, 6A de l'installation domotique 1. A partir de ces messages, il vérifie les capacités des actionneurs de gérer une clé de chiffrement temporaire, c'est-à-dire s'ils sont capables de reconnaître, de mémoriser, d'utiliser et d'effacer de leur mémoire (même sans ordre explicite d'effacement) une clé de chiffrement temporaire. Il détermine ensuite le ou les actionneurs de premier type qui sont capables de gérer une clé de chiffrement temporaire et sont par conséquent susceptibles d'être configurés. Ici, lors de l'étape E120, le dispositif de configuration 2 détermine que les deux actionneurs 5A et 6A sont susceptibles d'être configurés.

En variante, l'étape E120 de détermination d'au moins un actionneur susceptible d'être configuré pourrait être réalisée par des actions exécutées par un utilisateur, par l'intermédiaire de l'interface homme-machine 21 du dispositif de configuration 2, ou bien par un fichier de configuration transmis préalablement au dispositif de configuration 2.

Le procédé comprend ensuite une étape E130 d'obtention d'une clé de chiffrement temporaire KTi. Lors de cette étape E130, le dispositif de configuration 2 génère une clé de chiffrement temporaire KTi qui a une durée de validité limitée ΔT_KTi. La lettre « i » désigne un indice de clé temporaire : à chaque génération, et plus généralement à chaque obtention, d'une nouvelle clé temporaire, l'indice i est incrémenté de 1. La durée de validité ΔT_KTi peut être prédéterminée, c'est-à-dire fixée à l'avance. Dans ce cas, elle est par exemple égale à x minutes, par exemple 60 minutes. La clé de chiffrement temporaire KTi est destinée à être utilisée pour sécuriser les communications entre les actionneurs 5A, 6A, déterminés à l'étape E120, et le dispositif de configuration 2 durant une configuration de ces actionneurs. La durée de validité ΔT_KTi prédéterminée est donc adaptée pour couvrir la durée d'une telle opération de configuration.

En variante, la clé de chiffrement temporaire KTi peut avoir été générée au préalable, c'est-à-dire par anticipation, soit par le dispositif de configuration 2 lui-même, soit par une autre entité (par exemple un serveur sécurisé accessible à travers un réseau de communication) destinée à fournir les clés temporaires au dispositif de configuration 2. Le dispositif de configuration 2 pourrait dans ce cas stocker en mémoire un lot de clés de chiffrement temporaires pré-calculées. Une fois toutes les clés temporaires du lot distribuées, le dispositif de configuration 2 pourrait obtenir de façon sécurisée et stocker un nouveau lot de clés temporaires.

Suite à l'étape E130, le dispositif de configuration 2 distribue la clé temporaire KTi aux actionneurs 5A, 6A déterminés lors de l'étape E120, par transmission à chaque actionneur d'un message M_KT contenant la clé KTi, lors d'une étape d'envoi E140. Le dispositif de configuration 2 transmet également la la durée de validité ΔT_KTi de la clé KTi. Ici, le message M_KT véhiculant la clé temporaire KTi contient également la durée de validité ΔT_KTi de la clé. On pourrait également envisager que des clés temporaires différentes, par exemple KTi et KTi+1, soit transmises aux différents actionneurs 5A, 6A, respectivement. La durée de validité peut être la même pour toutes les clés de chiffrement temporaires.

En variante, les actionneurs 5A, 6A pourrait stocker en mémoire une durée prédéterminée ΔT_KT de validité d'une clé de chiffrement temporaire. Cette durée ΔT_KT pourrait avoir été préalablement enregistré par chaque actionneur lors d'une configuration et/ou en fin de fabrication en usine. Dans ce cas, le dispositif de configuration 2 n'a pas besoin de transmettre la durée de validité prédéterminée de la clé temporaire.

Lors d'une étape S140, les actionneurs 5A, 6A reçoivent la clé temporaire KTi et ici la durée de validité prédéterminée ΔT_KTi, véhiculées dans le message M_KT, et enregistrent ces données en mémoire. A la réception de la clé KTi, chaque actionneur 5A, 6A démarre un compteur de temps pour compter le temps écoulé depuis la réception de la clé KTi et surveiller l'expiration de la durée ΔT_KTi.

Le procédé se poursuit par une étape de communication E150, mise en œuvre par le dispositif de configuration 2 qui communique avec chaque actionneur 5A, 6A, selon le deuxième mode de communication. Cette étape permet au dispositif 2 de configurer chaque actionneur 5A, 6A. Le dispositif de configuration 2 et chaque actionneur 5A, 6A communiquent l'un avec l'autre de façon bidirectionnelle. Les communications sont sécurisées au moyen de la clé de chiffrement temporaire KTi. Lors de cette étape E150, le dispositif 2 configure de façon connue les actionneurs 5A, 6A, notamment en leur transmettant 5A, 6A, des données de configuration telles que des paramètres de fonctionnement de l'équipement domotique piloté par l'actionneur, une mise à jour logicielle du software installé dans l'actionneur, ou tout autre type de données de configuration. On désigne par la référence S150 l'étape correspondante de communication mise en œuvre par chaque actionneur 5A, 6A.

Après la configuration E150, le compteur de temps, préalablement déclenché par chaque actionneur 5A, 6A à la réception de la clé temporaire KTi, atteint la durée de validité prédéterminée ΔT_KTi. A l'expiration de la durée ΔT_KTi, de sa propre initiative, et donc de façon automatique, chaque actionneur 5A, 6A efface, ou supprime, la clé temporaire KTi de sa mémoire.

On pourrait envisager que chaque actionneur 5A, 6A transmette un message « M_END_VAL » de confirmation de fin de validité de la clé KTi, confirmant l'effacement effectif de la clé KTi, à destination du dispositif de configuration 2, lors d'une étape S160. Dans ce cas, le dispositif de configuration 2 pourrait vérifier si les actionneurs 5A, 6A ont bien confirmé l'effacement de leur clé temporaire, lors d'une étape E160. Dans le cas où un actionneur n'aurait pas confirmé l'effacement de la clé temporaire KTi, le dispositif de configuration 2 pourrait déclencher une action pour gérer l'actionneur défaillant, par exemple :
- afficher l'identifiant de l'actionneur défaillant sur l'écran 22 afin de permettre l'utilisateur de prendre des mesures appropriées (par exemple déclencher un effacement de clé sur ordre explicite du dispositif de configuration 2), et/ou
- transmettre l'identifiant de l'actionneur défaillant à un serveur de gestion, via un réseau de communication, afin de l'ajouter à une liste « noire » d'actionneurs jugés défaillants ou non conformes.

Dans la description qui précède, la durée de validité ΔT_KTi de la clé de chiffrement temporaire KTi est prédéterminée et transmise par le dispositif de configuration 2 aux actionneurs 5A, 6A susceptibles d'être configurés. Cela constitue un ordre implicite d'effacement de la clé temporaire KTi. A l'expiration de cette durée de validité ΔT_KTi, chaque actionneur efface de sa propre initiative la clé temporaire de sa mémoire.

Selon une variante de réalisation, la durée de validité ΔT_KTi est déterminée par l'envoi d'un message de fin de validité en provenance du dispositif de configuration 2 et à destination des actionneurs 5A, 6A ayant reçu la clé KTi. Dans ce cas, l'effacement de la clé temporaire KTi par les actionneurs 5A, 6A l'ayant précédemment reçue et mémorisée est déclenché sur réception d'un message explicite en provenance du dispositif de configuration 2. Ce message contient un ordre d'effacement et/ou une indication de fin de validité de la clé temporaire KTi. Dans les deux cas, il constitue une demande d'effacement de la clé KTi. La clé temporaire KTi peut ainsi être transmise aux actionneurs déterminés 5A, 6A sans durée de validité prédédéfinie. Après configuration E150 des actionneurs 5A, 6A, le dispositif de configuration 2 transmet à chaque actionneur 5A, 6A un message de demande d'effacement de la clé temporaire KTi, lors d'une étape E155. Sur réception de la demande d'effacement, chaque actionneur 5A, 6A efface de sa mémoire la clé temporaire KTi.

Le dispositif de configuration 2 peut aussi, suite à l'envoi de la clé temporaire KTi, lors d'une étape E142, mémoriser les identifiants des actionneurs ayant confirmé la réception de la clé KTi par l'envoi d'un message d'acquittement ACK_KTi. Ultérieurement, suite à la configuration E150 et à l'envoi E155 d'une demande d'effacement de la clé KTi, les actionneurs 5A, 6A ayant effectivement effacé leur clé peuvent transmettre un message de confirmation de fin de validité de la clé au dispositif de configuration 2, comme précédemment explicité. Le dispositif de configuration 2 peut alors vérifier si les actionneurs ayant reçu la clé KTi ont bien confirmé l'effacement de celle-ci, lors d'une étape E160. Dans le cas où un actionneur n'a pas confirmé l'effacement de la clé temporaire KTi, le dispositif de configuration 2 peut déclencher une action pour gérer l'actionneur défaillant (affichage à l'écran 22 et/ou transmission à un serveur de gestion de l'identifiant de l'actionneur défaillant).

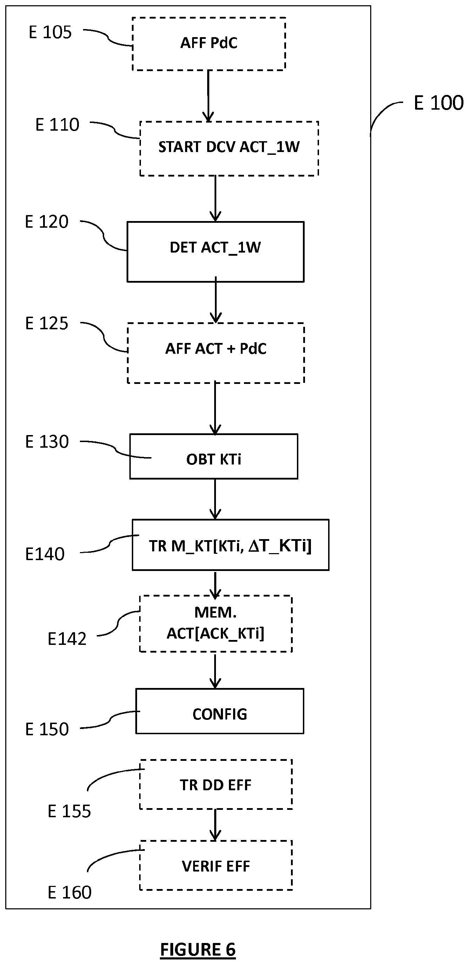

Comme précédemment indiqué les étapes E110, E142, E155 et E160 sont optionnelles. Sur la figure 6, on a représenté le procédé E100, selon une autre variante de réalisation du procédé de la figure 5, qui diffère du mode de réalisation (et de ses variantes) décrit en référence à la figure 5, par l'ajout d'autres étapes optionnelles E105 et E125. Par souci de clarté, seules ces étapes optionnelles sont décrites ci-après. Les étapes E105 et E125 peuvent être ajoutées indépendamment l'une de l'autre.

L'étape E105, mise en œuvre avant l'étape E110, est une étape d'affichage sur l'écran 22 du dispositif de configuration d'indication des points de commande qu'il convient de stimuler (c'est-à-dire sur lesquels il faut agir) pour déclencher le basculement en mode découvert des actionneurs. Dans l'exemple décrit ici, l'écran 22 affiche qu'il faut agir sur le point de commande 3A pour déclencher un basculement en mode découverte des actionneurs 5A et/ou 6A et sur le point de commande 3B pour déclencher un basculement en mode découvert de l'actionneur 6A. Ces informations d'appairage sont préalablement obtenues par le dispositif de configuration 2 lors d'une communication avec les points de commande 3A et 4A ou avec les actionneurs 5A et 6A.

L'étape E125, mise en œuvre après l'étape E120 et avant l'étape E130, consiste à afficher sur l'écran 22 les résultats de la découverte des actionneurs, c'est-à-dire les actionneurs découverts et des points de commande auxquels ils sont appairés.

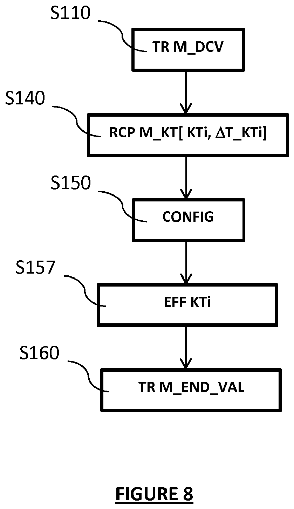

L'invention concerne aussi un procédé de fonctionnement d'un actionneur appartenant à une installation domotique. Ce procédé de fonctionnement comprend les étapes précédemment décrites qui sont mises en œuvre par un actionneur (5A ou 6A). En référence à la figure 8, il comprend notamment les étapes successives suivantes :
- une étape S110 d'envoi d'un message de découverte M_DCV ;
- une étape S140 de réception d'un message contenant une clé de chiffrement temporaire KTi et ici une durée de validité limitée prédéterminée ΔT_KTi, en provenance du dispositif de configuration,
- une étape S150 de communication selon le deuxième mode de communication sécurisée au moyen de la clé temporaire KTi avec le dispositif de configuration 2, notamment pour configurer l'actionneur 5A (ou 6A), et
- avantageusement, une étape S157 d'effacement de la clé temporaire KTi de la mémoire de l'actionneur 5A (ou 6A) ;
- avantageusement encore, une étape S160 d'envoi d'un message de confirmation de fin de validité de la clé temporaire KTi, confirmant l'effacement de celle-ci.

Bien entendu, les étapes optionnelles précédemment décrites peuvent, en tout ou partie, être intégrées dans le procédé de fonctionnement de l'actionneur 5A (6A).

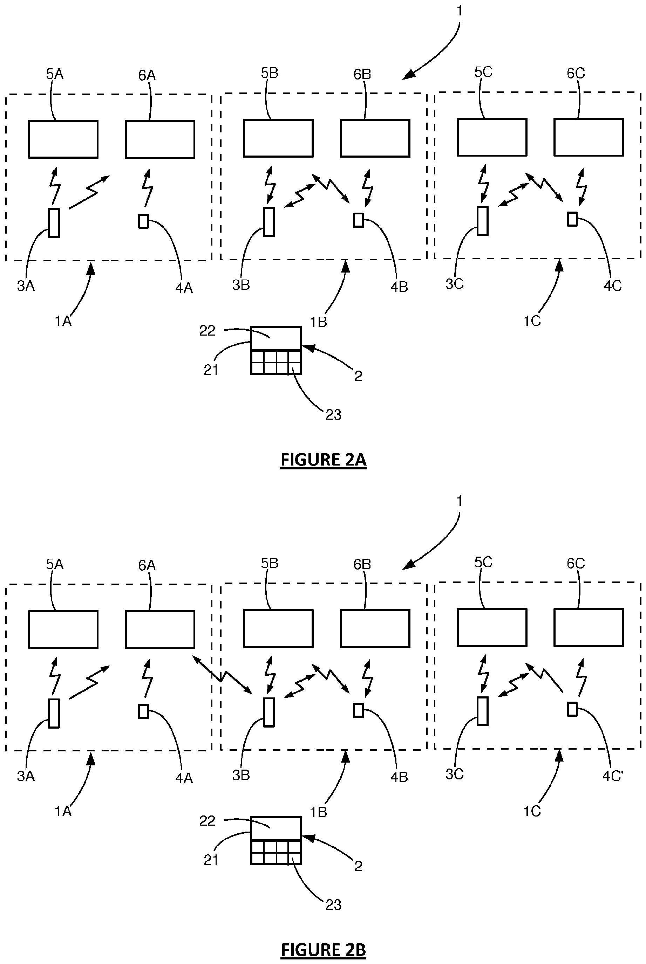

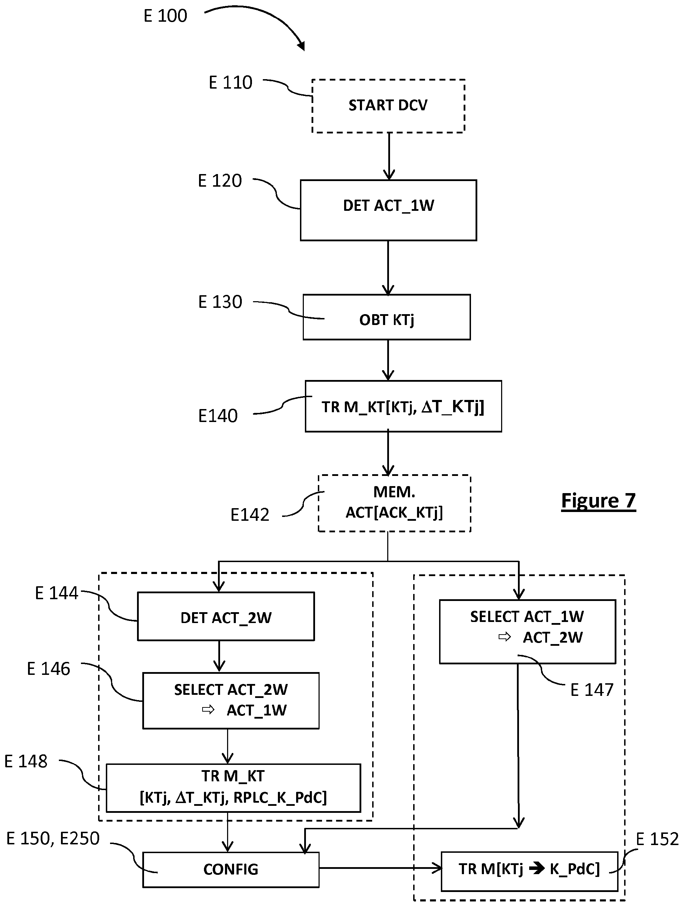

On va maintenant décrire un deuxième mode de réalisation du procédé de configuration E100, en référence aux figures 2A, 2B et 7.

Sur la figure 2A, on a représenté un deuxième exemple particulier de réalisation d'une installation domotique selon l'invention, avant configuration. Cette installation domotique 1 comprend trois parties 1A, 1B et 1C. Ce scindement de l'installation 1 en trois parties est purement virtuel et destiné à mieux faire comprendre l'invention.

La partie 1A de l'installation domotique 1 comprend les entités de la figure 1A, à savoir deux points de commande 3A, 4A du premier type et deux actionneurs 5A, 6A du premier type. Le point de commande 3A est appairé aux deux actionneurs 5A et 6A, et le point de commande 4A est appairé seulement à l'actionneur 6A.

La partie 1B de l'installation domotique 1 comprend des points de commande 3B et 4B et des actionneurs 5B et 6B. Les points de commande 3B, 4B et les actionneurs 5B, 6B qui leur sont appairés sont destinés à communiquer entre eux selon le deuxième mode de communication, et sont dits « du deuxième type ». Plus précisément, les points de commande 3B et 4B sont dits « du deuxième type » du fait qu'il sont aptes à communiquer selon le deuxième mode de communication. Les actionneurs 5B, 6B sont dits « du deuxième type » du fait qu'ils sont aptes à communiquer selon le deuxième mode de communication, lors d'un fonctionnement en mode d'utilisation. Dans l'exemple représenté sur la figure 1B, chaque point de commande 5B (respectivement 6B) est appairé avec les deux actionneurs 5B, 6B. Pour rappel, le deuxième mode de communication utilise une clé de chiffrement pour sécuriser les communications et est ici bidirectionnel (ou 2W). Chaque point de commande du deuxième type 3B (respectivement 4B) possède une clé de chiffrement qui lui est propre, nommée K_PdC_{3B} (respectivement K_PdC_{4B}). Les actionneurs 5B, 6B destinés à communiquer avec ce point de commande 3B (respectivement 4B) disposent de la clé de chiffrement K_PdC_{3B} (respectivement K_PdC_{4B}) du point de commande, qui est stockée en mémoire. Les actionneurs 5B, 6B sont également adaptés pour communiquer avec un dispositif de configuration, tel que le dispositif 2, selon le deuxième mode de communication, en utilisant une clé de chiffrement pour sécuriser les communications entre actionneur et dispositif de configuration.

Avant configuration (figure 2A), la troisième partie 1C est analogue à la deuxième partie 1B. Elle comprend deux points de commande 3C, 4C du deuxième type et des actionneurs 5C et 6C du deuxième type. Chaque actionneur 5C (respectivement 6C) est appairé aux deux points de commande 3C, 4C. Chaque point de commande 3C (respectivement 4C) possède une clé de chiffrement K_PdC_{3C} (K_PdC_{4C}) qui lui est propre. Les actionneurs 5C, 6C disposent chacun en mémoire de ces deux clés K_PdC_{3C} et K_PdC_{4C}.

Soulignons qu'un actionneur peut être « mixte » c'est-à-dire à la fois du premier type et du deuxième type, et donc aussi à la fois 1W et 2W. C'est le cas notamment lorsque l'actionneur est appairé à au moins un point de commande X du premier type et à au moins un point de commande Y du deuxième type. L'actionneur est donc du premier type vis-à-vis du point de commande X et du deuxième type vis-à-vis du point de commande Y. En revanche, un point de commande est soit du premier type, soit du deuxième type, et donc ici soit 1W, soit 2W.

En référence à la figure 7, le procédé de configuration comprend des étapes E120, E130 et E140 (analogues aux étapes correspondantes décrites en référence à la figure 5) mises en œuvre par le dispositif de configuration 2 pour les actionneurs du premier type 5A, 6A de l'installation 1. Bien entendu, si l'installation domotique 1 comprend d'autres actionneurs du premier type, notamment dans une autre partie de l'installation, par exemple un actionneur mixte (c'est-à-dire du premier type vis-à-vis d'un point de commande X et du deuxième type vis-à-vis d'un autre point de commande Y), les étapes E120, E130 et E140 sont exécutées aussi pour cet autre actionneur mixte. Ainsi, après avoir déterminé les actionneurs du premier type de l'installation 1 susceptibles d'être configurés (étape E120), le dispositif de configuration 1 obtient une clé de chiffrement temporaire KTj (étape E130) et distribue cette clé KTj, avec une durée de validité prédéterminée associée ΔT_KTj, aux actionneurs 5A, 6A du premier type déterminés comme susceptibles d'être configurés (étape E140).Tout ou partie des étapes optionnelles précédemment décrites, notamment les étapes E110 et E142 (apparaissant sur la figure 6) mais également les étapes E105 et E125A, peuvent être mises en œuvre de façon additionnelle pour les actionneurs du premier type 5A, 6A.

Le procédé de configuration comprend également des étapes (E144, E146 et E148) permettant de transformer un ou plusieurs actionneurs du deuxième type (vis-à-vis d'un point de commande du deuxième type) en actionneur(s) du premier type (vis-à-vis d'un autre point de commande du premier type). Cette transformation peut être réalisée par exemple à l'occasion d'un changement de point de commande, lorsqu'un point de commande du premier type est substitué à un point de commande du deuxième type. Elle permet à un actionneur du deuxième type vis-à-vis d'un ou plusieurs points de commande du deuxième type d'être transformé en un actionneur qui est soit exclusivement du premier type vis-à-vis d'un ou plusieurs nouveaux points de commande du premier type, soit « mixte », c'est-à-dire du deuxième type vis-à-vis d'un ou plusieurs point(s) de commande du deuxième type et du premier type vis-à-vis d'un ou plusieurs nouveaux point(s) de commande du premier type.

Par exemple, supposons que le point de commande 4C du deuxième type soit remplacé par un nouveau point de commande 4C' du premier type. Il convient dans ce cas de transformer les actionneurs 5C, 6C, qui sont initialement exclusivement du deuxième type, en actionneurs 5C, 6C mixtes, qui sont du deuxième type vis-à-vis du point de commande 3C et du premier type vis-à-vis du point de commande 4C' de substitution.

L'étape E144 permet au dispositif de configuration 2 de déterminer les actionneurs du deuxième type susceptibles d'être configurés. Cette étape E144 est analogue à l'étape E120, à la différence près qu'elle est mise en œuvre pour les actionneurs du deuxième type de l'installation domotique 1. Ainsi, lors de cette étape E144, le dispositif de configuration 2 reçoit des messages de découverte en provenance des points de commandes du deuxième type 3B, 4B, 3C, 4C et/ou des actionneurs du deuxième type 5B, 6B, 5C, 6C de l'installation domotique 1. L'envoi de ces messages de découverte par les actionneurs du deuxième type peut avoir été déclenché par une action prédéterminée (appui sur un bouton « PROGRAMMATION ») réalisée par un utilisateur sur des points de commande du deuxième type auxquels ces actionneurs sont appairés, par exemple les points de commande 3B et 3C. A partir de ces messages de découverte, le dispositif de configuration 2 vérifie les capacités des actionneurs du deuxième type pour gérer une clé de chiffrement temporaire (c'est-à-dire s'ils sont capables de reconnaître, de mémoriser, d'utiliser et d'effacer de leur mémoire la clé temporaire, même sans ordre explicite d'effacement). Il détermine ensuite le ou les actionneurs du deuxième type qui sont capables de gérer une clé de chiffrement temporaire et sont par conséquent susceptibles d'être configurés. Ici, lors de l'étape E144, le dispositif de configuration 2 détermine que les quatre actionneurs du deuxième type 5B, 6B, 5C, 6C sont susceptibles d'être configurés.

Le procédé se poursuit par une étape E146 de sélection, parmi les actionneurs du deuxième type déterminés lors de l'étape E144, à savoir 5B, 6B, 5C, 6C, d'un ou plusieurs actionneurs destinés à être transformés en actionneur(s) du premier type. Cette sélection peut être réalisée par une saisie de l'utilisateur, par l'intermédiaire de l'interface homme-machine du dispositif de configuration 2. En variante, elle peut aussi être réalisée par lecture ou à partir de données d'un fichier de configuration préalablement transmis au dispositif de configuration 2. Dans l'exemple décrit ici, le point de commande 4C du deuxième type (figure 2A) est remplacé par un point de commande 4C' du premier type (figure 2B). Dans ce contexte, il convient de transformer les actionneurs 5C, 6C en actionneurs du premier type vis-à-vis du point de commande 4C'. Bien entendu, les actionneurs 5C, 6C peuvent demeurer du deuxième type vis-à-vis du point de commande du deuxième type 3C. Par conséquent, lors de l'étape E146, le dispositif de configuration 2 sélectionne les actionneurs 5C et 6C. Ces actionneurs sélectionnés 5C, 6C sont destinés à communiquer selon le premier mode de communication lors de leur fonctionnement en mode d'utilisation, à l'issue de l'exécution du procédé de configuration, notamment avec le nouveau point de commande du premier type 4C'. Ils sont dits actionneurs sélectionnés du deuxième type.

Le procédé passe ensuite à l'étape E148 d'envoi de la clé de chiffrement temporaire KTj aux actionneurs sélectionnés du deuxième type. Lors de cette étape E148, le dispositif de configuration 2 transmet à chacun des actionneurs sélectionnés du deuxième type 5C, 6C la clé temporaire KTj et ici sa durée de validité prédéterminée ΔT_KTj. Ces données de clé temporaire sont contenues dans un message M_KT. Sur réception de ce message, chaque actionneur sélectionné du deuxième type 5C, 6C mémorise la clé temporaire KTj et sa durée de validité ΔT_KTj. Ce message M_KT pourrait également contenir un ordre de remplacement de la clé de chiffrement propre au point de commande 4C, notée K_PdC_{4C}, par la clé de chiffrement temporaire KTj. Dans ce cas, la clé temporaire KTj est mémorisée à la place de la précédente clé de chiffrement enregistrée K_PdC_{4C}, à savoir celle du point de commande 4C, qui est supprimé.

Le procédé se poursuit par la mise en œuvre d'une première et d'une deuxième étape de communication E150, E250 permettant respectivement la configuration des actionneurs du premier type déterminés 5A, 6A et celle des actionneurs sélectionnés du deuxième type 5C, 6C. Il pourrait également y avoir une étape de communication pour configurer les actionneurs 5B, 6B si besoin. L'étape E150 est analogue à celle décrite précédemment en référence à la figure 5. Le dispositif de configuration 2 échange des données de configuration avec chacun des actionneurs du premier type déterminés 5A, 6A. L'étape E250 de communication est également analogue à l'étape E150 précédemment décrite, à la différence près que le dispositif de configuration 2 échange des données de configuration avec chacun des actionneurs sélectionnés du deuxième type 5C, 6C. En outre, lors de la deuxième étape de communication E250, le dispositif de configuration 2 peut transmettre aux actionneurs 5C, 6C des données de gestion de la clé de chiffrement K_PdC_{4C} propre au point de commande du deuxième type 4C, par exemple un ordre d'effacement (si celui-ci n'a pas déjà été transmis). Les différentes communications E150, E250 entre le dispositif de configuration 2 et les différents actionneurs sont sécurisées au moyen de la clé temporaire de chiffrement KTj.

Notons que les étapes de communication E150, E250 peuvent être réalisées avec une certaine corrélation temporelle, par exemple de façon concomitante ou successivement, ou bien sans corrélation temporelle entre elles. Ces étapes de communication E150, E250 peuvent comprendre en définitive différentes communications entre, d'une part, le dispositif de configuration 2 et, d'autre part, les différents actionneurs respectivement. Ces différentes communications peuvent être considérées comme différentes étapes, ou sous-étapes, de communication, qui peuvent être réalisées avec une certaine corrélation temporelle, par exemple de façon concomitante ou successivement, ou bien sans corrélation temporelle entre elles

En variante, les étapes E144, E146 et E148 relatives à la transformation d'un actionneur du deuxième type en un actionneur du premier type peuvent être mises en œuvre avant ou parallèlement aux étapes E120, E130 et E140 relatives à la distribution de la clé temporaire KTi aux actionneurs du premier type.

A réception de la clé temporaire KTj , chaque actionneur 5A, 6A, 5C, 6C déclenche un compteur de temps pour surveiller la durée de validité de la clé temporaire KTj. A l'expiration de la durée de validité ΔT_KTj, les actionneurs effacent automatiquement la clé temporaire KTj de leur mémoire. Comme précédemment explicité en référence à la figure 5, la fin de validité de la clé temporaire KTj pourrait être déterminée par l'envoi d'un message de fin de validité, demandant explicitement l'effacement de la clé temporaire, depuis le dispositif de configuration 2 à destination des actionneurs concernés.

Le procédé de configuration peut encore comprendre des étapes visant à transformer un actionneur du premier type (vis-à-vis d'un point de commande du premier type) en un actionneur du deuxième type (vis-à-vis d'un autre point de commande du deuxième type). Supposons par exemple que l'on souhaite appairer l'actionneur du premier type 6A (figure 2A) au point de commande du deuxième type 3B (figure 2B). En d'autres termes, on souhaite que l'actionneur du premier type 6A soit capable de communiquer avec le point de commande du deuxième type 3B, selon le deuxième mode de communication sécurisée au moyen de la clé de chiffrement K_PdC_{3B} propre au point de commande 3B, lors d'un fonctionnement en mode d'utilisation, à l'issue de la configuration E100.

A cet effet, en référence à la figure 2B, suite à la détermination E120 des actionneurs du premier type susceptibles d'être configurés et à l'envoi E140 de la clé temporaire KTj et ici de sa durée de validité ΔT_KTj aux actionneurs du premier type déterminés, le procédé comprend une étape E147 de sélection, parmi les actionneurs du premier type susceptibles d'être configurés 5A, 6A, d'au moins un actionneur destiné à communiquer selon le deuxième mode de communication sécurisée au moyen d'un clé de chiffrement propre à un point de commande, lors d'un fonctionnement en mode d'utilisation, à la fin de l'exécution du procédé de configuration E100. L'actionneur sélectionné lors de cette étape E147 est dit actionneur sélectionné du premier type. En l'espèce, lors de l'étape E147, le dispositif de configuration 2 sélectionne l'actionneur 6A en tant qu'actionneur sélectionné du premier type.

L'étape de sélection E147 est suivie par l'étape de communication E150, précédemment décrite. Lors de cette étape E150, le dispositif de configuration 2 communique avec l'actionneur 6A (qui est encore du premier type quant à son fonctionnement en mode d'utilisation) selon le deuxième mode de communication sécurisée au moyen de la clé temporaire KTj. Le dispositif 2 et l'actionneur 6A échangent des données de configuration de manière à configurer l'actionneur 6A. Ainsi, la configuration de l'actionneur 6A sélectionné du premier type est réalisée par des communications bidirectionnelles entre l'actionneur 6A et le dispositif de configuration 2, sécurisées par la clé temporaire KTj.

Suite à l'étape de communication E150, le procédé peut comprendre une étape E152 d'envoi par le dispositif de configuration 2 à l'actionneur sélectionné du premier type 6A (ou le cas échéant aux actionneurs sélectionnés du premier type) d'un message contenant un ordre de remplacement de la clé de chiffrement temporaire KTj par la clé de chiffrement K_PdC_{3B} propre au point de commande 3B. Cette étape d'envoi E152 peut avantageusement être sécurisée au moyen de la clé temporaire KTj. Sur réception de ce message, l'actionneur 6A efface la clé temporaire KTj de sa mémoire et la remplace par la clé de chiffrement K_PdC_{3B}. En variante, le dispositif de configuration 2 pourrait transmettre un message de fin de validité de la clé temporaire pour ordonner l'effacement de la clé temporaire KTj par l'actionneur 6A. En variante encore, la clé temporaire KTj pourrait être effacée automatiquement à la fin de sa durée de validité prédéterminée ΔT_KTj. Dans ces deux variantes, le dispositif de configuration pourrait transmettre à l'actionneur 6A un message de demande d'enregistrement de la clé K_PdC_{3B} du point de commande, avantageusement de façon sécurisée au moyen de la clé temporaire KTj.

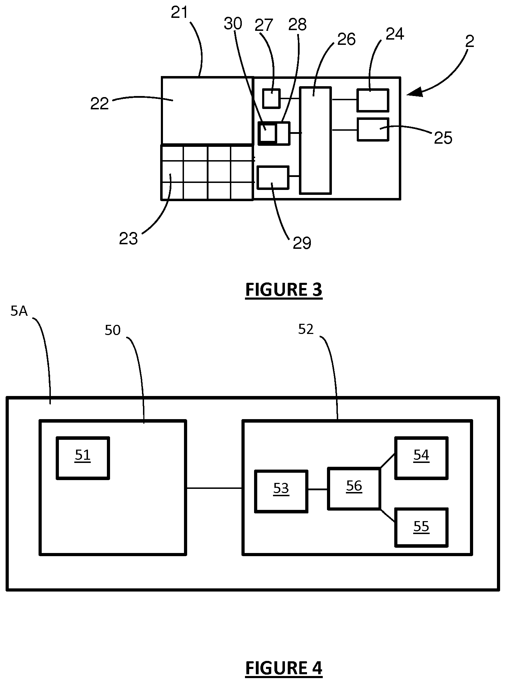

En référence, aux figures 3 et 4, l'invention concerne aussi un dispositif de configuration d'une installation domotique et un actionneur appartenant à cette installation domotique. Celle-ci comprend notamment la partie 1A, comportant :
- un ou plusieurs points de commande du premier type 3A, 4A, destinés à communiquer selon un premier mode de communication, et
- au moins un actionneur 5A, 6A:
   - destiné communiquer selon le premier mode de communication avec au moins un point de commande du premier type 3A, 4A, lors d'un fonctionnement en mode d'utilisation, et
   - aptes à communiquer selon un deuxième mode de communication sécurisée au moyen d'une clé de chiffrement, avec un dispositif de configuration, lors d'un fonctionnement en mode de configuration.

L'installation peut aussi comprendre les parties 1B et 1C de l'installation domotique 1, précédemment décrites.

En référence à la figure 4, un actionneur, tel que l'actionneur 5A, selon une forme particulière de réalisation de l'invention comprend principalement un module 50 de pilotage d'un équipement domotique, intégrant une mémoire 51 de stockage de paramètres de fonctionnement de l'équipement domotique, et un module de communication 52, ici par voie radio, intégrant une mémoire 53 de stockage de paramètres de communication. Le module de communication 52 comporte un élément 54 d'émission de données, ici par voie radio, un élément 55 de réception de données, ici par voie radio, et un élément 56 de gestion des communications avec un point de commande et/ou avec un dispositif de configuration. Le module de communication 52 est notamment adapté pour :
- destiné à communiquer selon le premier mode de communication avec au moins un point de commande du premier type, lors d'un fonctionnement en mode d'utilisation, et
- apte à communiquer selon un deuxième mode de communication sécurisée au moyen d'une clé de chiffrement, avec un dispositif de configuration, lors d'un fonctionnement en mode de configuration.

Selon sa configuration, le module de communication 52 est aussi capable de communiquer selon le deuxième mode de communication au moyen d'une clé de chiffrement propre à un point de commande, enregistrée dans la mémoire 52 lors d'un fonctionnement en mode d'utilisation.

Le module de communication 52, notamment l'élément de gestion 56, est aussi adapté pour gérer une clé de chiffrement temporaire, notamment :
- recevoir et traiter un message contenant une clé temporaire de chiffrement (KTi, KTj, etc.) ayant une durée de validité limitée, en provenance d'un dispositif de configuration, et stocker en mémoire 53 cette clé temporaire, le cas échéant également sa durée de validité ;
- communiquer selon le deuxième mode de communication avec le dispositif de configuration 2, en utilisant la clé temporaire reçue pour sécuriser les communications avec le dispositif de configuration 2 ;
- effacer la clé temporaire à l'expiration de sa durée de validité, soit de façon automatique, dans le cas où la durée de validité est prédéterminée, soit sur réception d'un message de fin de validité en provenance du dispositif de configuration, ce message constituant un ordre explicite d'effacement de la clé temporaire ;
- et avantageusement émettre un message de confirmation de fin de validité de la clé de chiffrement temporaire, à destination du dispositif de configuration, une fois la clé temporaire effacée.

Dans le cas où la durée de validité est prédéterminée, elle peut être transmise par le dispositif de configuration 2 lors du procédé E100 ou bien préalablement avoir été préalablement stockée en mémoire (lors d'une configuration préalable ou en en cours de fabrication).

En référence à la figure 3, un dispositif de configuration 2, selon une forme particulière de réalisation de l'invention comprend un élément 24 de réception de données, ici par voie radio, et un élément 25 d'émission de données, ici par voie radio. Le dispositif de configuration 2 comprend également une interface homme-machine 21. Cette interface comprend de préférence un écran 22 et un clavier 23. L'ensemble clavier 23 et écran 22 peut être réalisé par un écran tactile. Le dispositif de configuration 2 comprend encore une mémoire 27, destinée à stocker une ou plusieurs clés de chiffrement, un module de configuration 28 et un générateur 29 de clés de chiffrement temporaires. Les éléments 21 à 29 sont connectés à une unité centrale de commande 26, en l'espèce un microprocesseur, qui est destinée à contrôler le fonctionnement de ces éléments. Le module de génération 29, ou générateur de clés temporaires, est ici un module logiciel, stocké en mémoire, destiné à générer des clés de chiffrement, ces clés étant temporaires et ainsi associées à une durée de validité limitée dans le temps. Les clés temporaires, une fois générées, sont destinées à être enregistrées dans la mémoire 27, ici avec des données relatives à leur durée de validité. Le module de configuration 28 comprend, dans une mémoire, un programme d'ordinateur comprenant des instructions de code de programme informatique adaptées à la réalisation d'étapes du procédé de configuration de l'invention qui sont mises en œuvre par le dispositif de configuration 2, lorsque le programme est exécutée par l'unité centrale de commande 26. Le module de configuration 28 comporte notamment un élément 30 de gestion d'au moins une clé de chiffrement temporaire ayant une durée de validité limitée. L'élément de gestion 30 est notamment agencé de sorte à déterminer au moins un actionneur susceptible d'être configuré, obtenir une clé de chiffrement temporaire, commander l'envoi d'un message contenant la clé de chiffrement temporaire à l'au moins un actionneur susceptible d'être configuré. L'élément de gestion 30 est agencé, d'une manière générale, pour mettre en œuvre celles des étapes précédemment décrites qui sont mises en œuvre par le dispositif de configuration 2 et relatives à la gestion d'une clé temporaire (KTi ou KTj).

## Revendications

1. Procédé de configuration d'une installation domotique (1) comprenant :
- au moins un point de commande d'un premier type (3A, 4A), destiné à communiquer selon un premier mode de communication, et
- au moins un actionneur (5A, 6A, 5C, 6C) :
- destiné à communiquer, à la fin de l'exécution du procédé de configuration, selon le premier mode de communication avec au moins un point de commande du premier type (3A, 4A, 4C'), lors d'un fonctionnement en mode d'utilisation, et
- apte à communiquer selon un deuxième mode de communication sécurisée au moyen d'une clé de chiffrement, avec un dispositif de configuration (2), lors d'un fonctionnement en mode de configuration,
le procédé étant mis en œuvre par le dispositif de configuration (2) et comprenant au moins :
- une étape de détermination (E120) d'au moins un actionneur (5A, 6A, 6C) susceptible d'être configuré,
- une étape d'obtention (E130) d'une clé de chiffrement temporaire (KTi) ayant une durée de validité limitée ΔT_KTi),
- une étape d'envoi (E140) d'un message contenant la clé de chiffrement temporaire (KTi) à l'au moins un actionneur (5A, 6A, 5C, 6C) susceptible d'être configuré,
- une première étape de communication (E150) selon le deuxième mode de communication sécurisée au moyen de la clé de chiffrement temporaire (KTi), avec l'au moins un actionneur (5A, 6A, 5C, 6C) fonctionnant en mode de configuration, et
- une étape d'effacement de la clé de chiffrement temporaire, d'une mémoire de l'actionneur à l'expiration de la durée de validité de la clé de chiffrement temporaire.

2. Procédé de configuration selon la revendication précédente, **caractérisé**
- **en ce que**, selon le deuxième mode de communication sécurisée au moyen de la clé de chiffrement temporaire (KTi), l'au moins un actionneur (5A, 6A, 5C, 6C) et le dispositif de configuration (2) communiquent en émission et en réception,
- et **en ce que** le procédé comprend en outre une étape de réception (E160) depuis l'au moins un actionneur (5A, 6A, 5C, 6C) d'un message de confirmation de fin de validité de la clé de chiffrement temporaire (KTi).

3. Procédé de configuration selon l'une des revendications précédentes, **caractérisé en ce que** l'étape de détermination (E120) comprend une sous-étape de réception d'au moins un message émis depuis l'au moins un actionneur (5A, 6A, 5C, 6C).

4. Procédé de configuration selon l'une des revendications précédentes, **caractérisé en ce qu'**il comprend, préalablement à l'étape de détermination (E120), une étape de déclenchement (E110) du fonctionnement de l'au moins un actionneur (5A, 6A) en mode de configuration.

5. Procédé de configuration selon la revendication précédente, **caractérisé en ce que** l'étape de déclenchement (E110) consiste à effectuer une action prédéterminée sur un point de commande du premier type (3A, 4A) avec lequel l'au moins un actionneur (5A,6A) est destiné à communiquer.

6. Procédé de configuration selon l'une des revendications précédentes, **caractérisé**
- **en ce que** l'installation domotique (1) comprend en outre au moins un point de commande d'un deuxième type (3B, 4B, 3C, 4C) apte à communiquer selon le deuxième mode de communication sécurisée au moyen d'une clé de chiffrement propre audit point de commande du deuxième type,
- **en ce que** l'au moins un actionneur (5C, 6C), est apte en outre à communiquer avec l'au moins un point de commande du deuxième type, selon le deuxième mode communication sécurisée au moyen de la clé de chiffrement propre à l'au moins un point de commande du deuxième type (3C, 4C), lors d'un fonctionnement en mode d'utilisation,
- et **en ce que** le procédé comprend en outre une deuxième étape de communication (E250) selon le deuxième mode de communication sécurisée au moyen de la clé de chiffrement temporaire avec l'au moins un actionneur (5C, 6C).

7. Procédé de configuration selon la revendication précédente, **caractérisé en ce que**, lors de la deuxième étape de communication (E250), le dispositif de configuration (2) transmet à l'au moins un actionneur (5C, 6C) des données de gestion de la clé de chiffrement propre audit point de commande du deuxième type (3C, 4C).

8. Procédé de fonctionnement d'un actionneur (5A, 6A, 5C, 6C), l'actionneur appartenant à une installation domotique (1) et étant
- destiné à communiquer selon un premier mode de communication, avec au moins un point de commande d'un premier type (3A, 4A) appartenant à l'installation domotique (1), lors d'un fonctionnement en mode d'utilisation, et
- apte à communiquer selon un deuxième mode de communication sécurisée au moyen d'une clé de chiffrement, avec un dispositif de configuration (2), lors d'un fonctionnement en mode de configuration,
le procédé étant mis en œuvre par l'actionneur (5A, 6A, 5C, 6C) et comprenant au moins :
- une étape de réception (S140) d'un message contenant une clé de chiffrement temporaire (KTi) ayant une durée de validité limitée (ΔT_KTi), en provenance du dispositif de configuration (2),
- une étape de communication (S150) selon le deuxième mode de communication sécurisée au moyen de la clé de chiffrement temporaire (KTi), avec le dispositif de configuration (2), la clé de chiffrement temporaire étant effacée d'une mémoire de l'actionneur à l'expiration d'une durée de validité de ladite clé temporaire.

9. Procédé de fonctionnement selon la revendication précédente, **caractérisé en ce que**
- selon le deuxième mode de communication sécurisée, l'actionneur (5A, 6A, 5C, 6C) et le dispositif de configuration (2) communiquent en émission et en réception, et **en ce que**
- le procédé comprend en outre une étape d'émission (S160) d'un message de confirmation de fin de validité de la clé de chiffrement temporaire (KTi), à destination du dispositif de configuration (2).

10. Dispositif de configuration d'une installation domotique (1), ladite installation comprenant :
- au moins un point de commande d'un premier type (3A, 4A), destiné à communiquer selon un premier mode de communication, et
- au moins un actionneur (5A, 6A, 5C, 6C):
- destiné communiquer selon le premier mode de communication avec au moins un point de commande du premier type (3A, 4A, 4C'), lors d'un fonctionnement en mode d'utilisation, et
- aptes à communiquer selon un deuxième mode de communication sécurisée au moyen d'une clé de chiffrement, avec un dispositif de configuration (2), lors d'un fonctionnement en mode de configuration,
le dispositif de configuration (2) comprenant au moins un élément (30) de gestion d'au moins une clé de chiffrement temporaire ayant une durée de validité limitée ΔT_KTi), ledit élément de gestion de clé temporaire étant agencé de sorte à déterminer au moins un actionneur susceptible d'être configuré, obtenir une clé de chiffrement temporaire, envoyer un message contenant la clé de chiffrement temporaire à l'au moins un actionneur susceptible d'être configuré, et effacer d'une mémoire de l'actionneur la clé de chiffrement temporaire à l'expiration d'une durée de validité de ladite clé temporaire.

11. Actionneur pour une installation domotique, ladite installation comprenant au moins un point de commande d'un premier type (3A, 4A) destiné à communiquer selon un premier mode de communication, ledit actionneur étant
- destiné à communiquer selon le premier mode de communication avec l'au moins un point de commande du premier type (3A, 4A), lors d'un fonctionnement en mode d'utilisation, et
- apte à communiquer selon un deuxième mode de communication sécurisée au moyen d'une clé de chiffrement, avec un dispositif de configuration (2), lors d'un fonctionnement en mode de configuration, **caractérisé en ce qu'**il comprend un module de communication (52) agencé de sorte à recevoir un message contenant une clé de chiffrement temporaire (KTi) ayant une durée de validité limitée ΔT_KTi), en provenance du dispositif de configuration (2) et à communiquer selon le deuxième mode de communication sécurisée au moyen de la clé de chiffrement temporaire (KTi), avec le dispositif de configuration (2) et **en ce que** le module de communication est agencé de sorte à effacer d'une mémoire de l'actionneur la clé de chiffrement temporaire à l'expiration d'une durée de validité de ladite clé temporaire.

12. Installation domotique comportant
- au moins un point de commande d'un premier type (3A, 4A), destiné à communiquer selon un premier mode de communication, et
- au moins un actionneur tel que défini selon la revendication 11.

## Patentansprüche

1. Konfigurationsverfahren für eine Heimautomatisierungsanlage (1) umfassend:
- mindestens einen Steuerungspunkt eines ersten Typs (3A, 4A), der dazu bestimmt ist, gemäß einer ersten Kommunikationsart zu kommunizieren, und
- mindestens ein Betätigungselement (5A, 6A, 5C, 6C):
- das dazu bestimmt ist, bei einem Betrieb im Nutzungsmodus am Ende der Ausführung des Konfigurationsverfahrens gemäß der ersten Kommunikationsart mit mindestens einem Steuerungspunkt des ersten Typs (3A, 4A, 4C') zu kommunizieren, und
- geeignet ist, bei einem Betrieb im Konfigurationsmodus gemäß einer zweiten Art von Kommunikation, die mittels eines Verschlüsselungsschlüssels gesichert ist, mit einer Konfigurationsvorrichtung (2) zu kommunizieren,
wobei das Verfahren durch die Konfigurationsvorrichtung (2) umgesetzt wird und mindestens Folgendes umfasst:
- einen Schritt des Bestimmens (E120) mindestens eines Betätigungselements (5A, 6A, 6C), das konfigurierbar ist,
- einen Schritt des Beziehens (E130) eines temporären Verschlüsselungsschlüssels (KTi) mit einer begrenzten Gültigkeitsdauer ΔT_KTi),
- einen Schritt des Sendens (E140) einer Nachricht, die den temporären Verschlüsselungsschlüssel (KTi) enthält, an das mindestens eine Betätigungselement (5A, 6A, 5C, 6C), das konfigurierbar ist,
- einen ersten Schritt des Kommunizierens (E150) gemäß der zweiten Art von Kommunikation, die mittels des temporären Verschlüsselungsschlüssels (KTi) gesichert ist, mit dem mindestens einen Betätigungselement (5A, 6A, 5C, 6C), das im Konfigurationsmodus arbeitet, und
- einen Schritt des Löschens des temporären Verschlüsselungsschlüssels von einem Speicher des Betätigungselements bei Ablauf der Gültigkeitsdauer des temporären Verschlüsselungsschlüssels.

2. Konfigurationsverfahren nach dem vorhergehenden Anspruch, **dadurch gekennzeichnet,**
- **dass** gemäß der zweiten Art von Kommunikation, die mittels des temporären Verschlüsselungsschlüssels (KTi) gesichert ist, das mindestens eine Betätigungselement (5A, 6A, 5C, 6C) und die Konfigurationsvorrichtung (2) im Sende- und Empfangsbetrieb kommunizieren,
- und dadurch, dass das Verfahren ferner einen Schritt des Empfangens (E160) einer Bestätigungsnachricht über das Ende der Gültigkeit des temporären Verschlüsselungsschlüssels (KTi) von dem mindestens einen Betätigungselement (5A, 6A, 5C, 6C) umfasst.

3. Konfigurationsverfahren nach einem der vorhergehenden Ansprüche, **dadurch gekennzeichnet, dass** der Schritt des Bestimmens (E120) einen Unterschritt des Empfangens mindestens einer Nachricht umfasst, die von dem mindestens einen Betätigungselement (5A, 6A, 5C, 6C) gesendet wurde.

4. Konfigurationsverfahren nach einem der vorhergehenden Ansprüche, **dadurch gekennzeichnet, dass** es vor dem Schritt des Bestimmens (E120) einen Schritt des Auslösens (E110) des Betriebs des mindestens einen Betätigungselements (5A, 6A) im Konfigurationsmodus umfasst.

5. Konfigurationsverfahren nach dem vorhergehenden Anspruch, **dadurch gekennzeichnet, dass** der Schritt des Auslösens (E110) darin besteht, eine vorbestimmte Aktion an einem Steuerungspunkt des ersten Typs (3A, 4A) durchzuführen, mit dem das mindestens eine Betätigungselement (5A, 6A) kommunizieren soll.

6. Verfahren nach einem der vorhergehenden Ansprüche, **dadurch gekennzeichnet,**
- **dass** die Heimautomatisierungsanlage (1) ferner mindestens einen Steuerungspunkt eines zweiten Typs (3B, 4B, 3C, 4C) umfasst, der geeignet ist, gemäß der zweiten Art von Kommunikation zu kommunizieren, die mittels eines Verschlüsselungsschlüssels gesichert ist, der dem Steuerungspunkt des zweiten Typs eigen ist,
- dadurch, dass das mindestens eine Betätigungselement (5C, 6C) ferner geeignet ist, bei einem Betrieb im Nutzungsmodus mit dem mindestens einen Steuerungspunkt des zweiten Typs gemäß der zweiten Art von Kommunikation zu kommunizieren, die mittels des Verschlüsselungsschlüssels gesichert ist, der dem mindestens einen Steuerungspunkt des zweiten Typs (3C, 4C) eigen ist,
- und dadurch, dass das Verfahren ferner einen zweiten Schritt des Kommunizierens (E250) gemäß der zweiten Art von Kommunikation, die mittels des temporären Verschlüsselungsschlüssels gesichert ist, mit dem mindestens einen Betätigungselement (5C, 6C) umfasst.

7. Konfigurationsverfahren nach dem vorhergehenden Anspruch, **dadurch gekennzeichnet, dass** beim zweiten Schritt des Kommunizierens (E250) die Konfigurationsvorrichtung (2) an das mindestens eine Betätigungselement (5C, 6C) Daten zur Verwaltung des Verschlüsselungsschlüssels überträgt, der dem Steuerungspunkt des zweiten Typs (3C, 4C) eigen ist.

8. Betriebsverfahren eines Betätigungselements (5A, 6A, 5C, 6C), wobei das Betätigungselement zu einer Heimautomatisierungsanlage (1) gehört und
- dazu bestimmt ist, bei einem Betrieb im Nutzungsmodus gemäß einer ersten Kommunikationsart mit mindestens einem Steuerungspunkt eines ersten Typs (3A, 4A) zu kommunizieren, der zu der Heimautomatisierungsanlage (1) gehört, und
- geeignet ist, bei einem Betrieb im Konfigurationsmodus gemäß einer zweiten Art von Kommunikation, die mittels eines Verschlüsselungsschlüssels gesichert ist, mit einer Konfigurationsvorrichtung (2) zu kommunizieren,
wobei das Verfahren durch das Betätigungselement (5A, 6A, 5C, 6C) umgesetzt wird und mindestens Folgendes umfasst:
- einen Schritt des Empfangens (S140) einer Nachricht, die einen temporären Verschlüsselungsschlüssel (KTi) mit einer begrenzten Gültigkeitsdauer (ΔT_KTi) enthält, von der Konfigurationsvorrichtung (2),
- einen Schritt des Kommunizierens (S150) gemäß der zweiten Art von Kommunikation, die mittels des temporären Verschlüsselungsschlüssels (KTi) gesichert ist, mit der Konfigurationsvorrichtung (2), wobei der temporäre Verschlüsselungsschlüssel bei Ablauf einer Gültigkeitsdauer des temporären Schlüssels von einem Speicher des Betätigungselements gelöscht wird.

9. Betriebsverfahren nach dem vorhergehenden Anspruch, **dadurch gekennzeichnet, dass**
- gemäß der zweiten Art von gesicherter Kommunikation das Betätigungselement (5A, 6A, 5C, 6C) und die Konfigurationsvorrichtung (2) im Sende- und Empfangsbetrieb kommunizieren, und dadurch, dass
- das Verfahren ferner einen Schritt des Sendens (S160) einer Bestätigungsnachricht über das Ende der Gültigkeit des temporären Verschlüsselungsschlüssels (KTi) an die Konfigurationsvorrichtung (2) umfasst.

10. Konfigurationsverfahren für eine Heimautomatisierungsanlage (1), die Anlage umfassend:
- mindestens einen Steuerungspunkt eines ersten Typs (3A, 4A), der dazu bestimmt ist, gemäß einer ersten Kommunikationsart zu kommunizieren, und
- mindestens ein Betätigungselement (5A, 6A, 5C, 6C):
- das dazu bestimmt ist, bei einem Betrieb im Nutzungsmodus gemäß der ersten Kommunikationsart mit mindestens einem Steuerungspunkt des ersten Typs (3A, 4A, 4C') zu kommunizieren, und
- geeignet ist, bei einem Betrieb im Konfigurationsmodus gemäß einer zweiten Art von Kommunikation, die mittels eines Verschlüsselungsschlüssels gesichert ist, mit einer Konfigurationsvorrichtung (2) zu kommunizieren,
die Konfigurationsvorrichtung (2) umfassend mindestens ein Element (30) zur Verwaltung mindestens eines temporären Verschlüsselungsschlüssels mit einer begrenzten Gültigkeitsdauer ΔT_KTi), wobei das Element zur Verwaltung temporärer Schlüssel so angeordnet ist, dass mindestens ein Betätigungselement bestimmt wird, das konfigurierbar ist, ein temporärer Verschlüsselungsschlüssel bezogen wird, eine Nachricht, die den temporären Verschlüsselungsschlüssel enthält, an das mindestens eine Betätigungselement gesendet wird, das konfigurierbar ist, und bei Ablauf einer Gültigkeitsdauer des temporären Schlüssels der temporäre Verschlüsselungsschlüssel von einem Speicher des Betätigungselements gelöscht wird.

11. Betätigungselement für eine Heimautomatisierungsanlage, die Anlage umfassend mindestens einen Steuerungspunkt eines ersten Typs (3A, 4A), der dazu bestimmt ist, gemäß einem ersten Kommunikationsmodus zu kommunizieren, wobei das Betätigungselement
- dazu bestimmt ist, bei einem Betrieb im Nutzungsmodus gemäß der ersten Kommunikationsart mit dem mindestens einen Steuerungspunkt des ersten Typs (3A, 4A) zu kommunizieren, und
- geeignet ist, bei einem Betrieb im Konfigurationsmodus gemäß einer zweiten Art von Kommunikation, die mittels eines Verschlüsselungsschlüssels gesichert ist, mit einer Konfigurationsvorrichtung (2) zu kommunizieren,
**dadurch gekennzeichnet, dass** es ein Kommunikationsmodul (52) umfasst, das angeordnet ist, eine Nachricht, die einen temporären Verschlüsselungsschlüssel (KTi) mit einer begrenzten Gültigkeitsdauer ΔT_KTi) enthält, von der Konfigurationsvorrichtung (2) zu empfangen und gemäß der Art von Kommunikation, die mittels des temporären Verschlüsselungsschlüssels (KTi) gesichert ist, mit der Konfigurationsvorrichtung (2) zu kommunizieren, und dadurch, dass das Kommunikationsmodul angeordnet ist, bei Ablauf einer Gültigkeitsdauer des temporären Schlüssels den temporären Verschlüsselungsschlüssel von einem Speicher des Betätigungselements zu löschen.

12. Heimautomatisierungsanlage aufweisend
- mindestens einen Steuerungspunkt eines ersten Typs (3A, 4A), der dazu bestimmt ist, gemäß einer ersten Kommunikationsart zu kommunizieren, und
- mindestens ein Betätigungselement nach Anspruch 11.

## Claims

1. A method for configuring a home-automation installation (1) comprising:
- at least one control unit of a first type (3A, 4A), designed to communicate according to a first mode of communication, and
- at least one actuator (5A, 6A, 5C, 6C):
- designed to communicate, at the end of the execution of the configuration method, according to the first mode of communication, with at least one control unit of the first type (3A, 4A, 4C'), during an operation in utilization mode, and
- capable of communicating according to a second mode of communication, made secure by means of an encryption key, with a configuration device (2), during an operation in configuration mode,
the method being implemented by the configuration device (2) and comprising at least:
- a step (E120) for determining at least one actuator (5A, 6A, 6C) able to be configured,
- a step (E130) for obtaining a temporary encryption key (KTi) having a limited period of validity ΔT_KTi),
- a step (E140) for sending a message containing the temporary encryption key (KTi) to the at least one actuator (5A, 6A, 5C, 6C) able to be configured,
- a first step (E150) for communicating according to the second mode of communication, made secure by means of the temporary encryption key (KTi), with the at least one actuator (5A, 6A, 5C, 6C) operating in configuration mode, and
- a step for erasing the temporary encryption key, from a memory of the actuator upon the expiration of the period of validity of the temporary encryption key.

2. The configuration method as claimed in the preceding claim, **characterized**
- **in that**, according to the second mode of communication made secure by means of the temporary encryption key (KTi), the at least one actuator (5A, 6A, 5C, 6C) and the configuration device (2) communicate as a transmitter and as a receiver,
- and **in that** the method furthermore comprises a step for receiving (E160) from the at least one actuator (5A, 6A, 5C, 6C) a message confirming the end of validity of the temporary encryption key (KTi).

3. The configuration method as claimed in one of the preceding claims, **characterized in that** the determination step (E120) comprises a sub-step for receiving at least one message sent from the at least one actuator (5A, 6A, 5C, 6C).

4. The configuration method as claimed in one of the preceding claims, **characterized in that** it comprises, prior to the determination step (E120), a step (E110) for triggering the operation of the at least one actuator (5A, 6A) in configuration mode.

5. The configuration method as claimed in the preceding claim, **characterized in that** the triggering step (E110) consists in carrying out a predetermined action on a control unit of the first type (3A, 4A) with which the at least one actuator (5A,6A) is designed to communicate.

6. The configuration method as claimed in one of the preceding claims, **characterized**
- **in that** the home-automation installation (1) furthermore comprises at least one control unit of a second type (3B, 4B, 3C, 4C) capable of communicating according to the second mode of communication made secure by means of an encryption key specific to said control unit of the second type,
- **in that** the at least one actuator (5C, 6C) is furthermore capable of communicating with the at least one control unit of the second type, according to the second mode communication made secure by means of the encryption key specific to the at least one control unit of the second type (3C, 4C), during an operation in utilization mode,
- and **in that** the method furthermore comprises a second step (E250) for communicating according to the second mode of communication, made secure by means of the temporary encryption key, with the at least one actuator (5C, 6C).

7. The configuration method as claimed in the preceding claim, **characterized in that**, during the second communication step (E250), the configuration device (2) transmits data to the at least one actuator (5C, 6C) for managing the encryption key specific to said control unit of the second type (3C, 4C).

8. A method of operation of an actuator (5A, 6A, 5C, 6C), the actuator belonging to a home-automation installation (1) and being
- designed to communicate according to a first mode of communication, with at least one control unit of a first type (3A, 4A) belonging to the home-automation installation (1), during an operation in utilization mode, and
- capable of communicating according to a second mode of communication, made secure by means of an encryption key, with a configuration device (2), during an operation in configuration mode,
the method being implemented by the actuator (5A, 6A, 5C, 6C) and comprising at least:
- a step (S140) for receiving a message containing a temporary encryption key (KTi) having a limited period of validity (ΔT_KTi), coming from the configuration device (2),
- a step (S150) for communicating according to the second mode of communication, made secure by means of the temporary encryption key (KTi), with the configuration device (2), the temporary encryption key being erased from a memory of the actuator upon the expiration of the period of validity of said temporary key.

9. The method of operation as claimed in the preceding claim, **characterized in that**
- according to the second secure mode of communication, the actuator (5A, 6A, 5C, 6C) and the configuration device (2) communicate as a transmitter and as a receiver, and **in that**
- the method furthermore comprises a step (S160) for sending a message confirming the end of validity of the temporary encryption key (KTi), destined for the configuration device (2).

10. A device for configuring a home-automation installation (1), said installation comprising:
- at least one control unit of a first type (3A, 4A), designed to communicate according to a first mode of communication, and
- at least one actuator (5A, 6A, 5C, 6C):
- designed to communicate according to the first mode of communication with at least one control unit of the first type (3A, 4A, 4C'), during an operation in utilization mode, and
- capable of communicating according to a second mode of communication, made secure by means of an encryption key, with a configuration device (2), during an operation in configuration mode,
the configuration device (2) comprising at least one element (30) for managing at least one temporary encryption key having a limited period of validity ΔT_KTi), said temporary key management element being arranged so as to determine at least one actuator able to be configured, to obtain a temporary encryption key, to send a message containing the temporary encryption key to the at least one actuator able to be configured, and to erase the temporary encryption key, from a memory of the actuator upon the expiration of the period of validity of said temporary key.

11. An actuator for a home-automation installation, said installation comprising at least one control unit of a first type (3A, 4A) designed to communicate according to a first mode of communication, said actuator being
- designed to communicate according to the first mode of communication with the at least one control unit of the first type (3A, 4A), during an operation in utilization mode, and
- capable of communicating according to a second mode of communication, made secure by means of an encryption key, with a configuration device (2), during an operation in configuration mode,
**characterized in that** it comprises a communication module (52) arranged so as to receive a message containing a temporary encryption key (KTi) having a limited period of validity ΔT_KTi), coming from the configuration device (2), and to communicate according to the second mode of communication, made secure by means of the temporary encryption key (KTi), with the configuration device (2), and **in that** the communication module is arranged so as to erase the temporary encryption key from a memory of the actuator upon the expiration of a period of validity of said temporary key.

12. The home-automation installation comprising
- at least one control unit of a first type (3A, 4A), designed to communicate according to a first mode of communication, and
- at least one actuator such as defined in claim 11.
